# EUROPÄISCHE PATENTSCHRIFT

(11) **EP 1 841 579 B1**
(45) Veröffentlichungstag und Bekanntmachung des Hinweises auf die Patenterteilung: **23.09.2015**
(21) Anmeldenummer: 05817923.5
(22) Anmeldetag: 13.12.2005
(51) Int. Cl.: B29C 37/00, B29C 45/16, B29C 67/24

(54) **VERFAHREN ZUM FORMEN UND BESCHICHTEN EINES SUBSTRATS**
METHOD FOR FORMING AND COATING A SUBSTRATE
PROCEDE DE MOULAGE ET DE REVETEMENT D'UN SUBSTRAT

(30) Priorität: 24.12.2004 DE 102004062511; 24.12.2004 DE 102004062510
(43) Veröffentlichungstag der Anmeldung: 10.10.2007
(73) Patentinhaber: Bayer Intellectual Property GmbH, 40789 Monheim (DE)
(72) Erfinder: ZÖLLNER, Olaf, 51375 Leverkusen (DE); JUST, Thorsten, 97950 Grossrinderfeld (DE); TILLACK, Jörg, 51427 Bergisch Gladbach (DE); HAUSSTÄTTER, Bernd, 51381 Leverkusen (DE); GLAWE, Michael, 42657 Solingen (DE); KONEJUNG, Klaus, 51467 Bergisch Gladbach (DE); LANG, Steffen, 50937 Köln (DE)
(74) Vertreter: BIP Patents
(86) Internationale Anmeldenummer: PCT/EP2005/013332
(87) Internationale Veröffentlichungsnummer: WO 2006/072366

(56) Entgegenhaltungen:
- WO-A-03/049929
- DE-C1- 19 650 854
- US-A- 6 019 921
- US-A1- 2003 197 307
- PATENT ABSTRACTS OF JAPAN Bd. 017, Nr. 041 (M-1359), 26. Januar 1993 (1993-01-26) & JP 04 259517 A (SEKISUI CHEM CO LTD), 16. September 1992 (1992-09-16)

## Beschreibung

Die Erfindung betrifft ein Verfahren zum Formen und Beschichten eines Substrats in einem Formwerkzeug, und ein Formwerkzeug.

Aus EP 197 496 A ist ein Verfahren zum Formen und Überziehen eines Substrats in einer Form bekannt. Das Formen des Substrats erfolgt zwischen zwei trennbaren Formwerkzeugen mit einem dazwischen liegenden Formhohlraum, bis das Substrat teilweise gehärtet ist. Wenn das Substrat soweit gehärtet ist, dass seine Oberfläche eine Haut gebildet hat, die für den Überzug aufnahmefähig ist, wird der Überzug in den Formhohlraum eingespritzt. Das Einspritzen des Überzugs erfolgt bei einem Druck, der wesentlich über dem Formhohlraumdruck liegt, der unmittelbar vor dem Einspritzen herrschte. Die Formwerkzeuge werden während des Einspritzens in einer geschlossenen, unter Druck stehenden Stellung gehalten, ohne wesentliches Zurückziehen der Formwerkzeuge. Der Überzug wird dadurch im Wesentlichen über die ganze Oberfläche des Substrats gezwungen und komprimiert. Gemäß EP 197 496 A erfolgt das Formen des Substrats mittels Spritzprägen. Mit dem Verfahren gemäß EP 197 496 A sollten diverse Nachteile, z.B. Verlängerung der Zykluszeit, vermieden werden, die mit einem Öffnen und Schließen des Formwerkzeugs vor dem Einspritzen des Überzugs verbunden sind. Durch das Einspritzen des Überzugs unter einem Druck, der größer als der Härtungsdruck ist, kann gemäß EP 197 496 A das Öffnen und Schließen umgangen werden. Nachteile an dem in EP 197 496 A beschriebenen Verfahren ergeben sich daraus, dass Substratherstellung und Substratbeschichtung sequentiell in einer Kavität stattfinden. Daher sind diverse Verfahrensparameter für die beiden Verfahrensschritte, wie z.B. Wanddicke des Überzuges oder Werkzeugoberflächentemperatur, nicht frei wählbar.

In DE 43 16 154 A ist ein Verfahren zur Beschichtung eines Innenausbauteils mit einem vernetzbaren aushärtenden Harz oder Lack beschrieben. Bei diesem Verfahren wird das Innenausbauteil lagedefiniert in ein Formwerkzeug eingelegt, um einen Überzug in der Art eines Spritzguss- oder Druckgussvorganges auf die Oberfläche des Innenausbauteils aufzutragen. Das Harz oder der Lack wird in der erforderlichen Gesamtdicke in dem geschlossenen Formwerkzeug in einem einzigen Arbeitsschritt aufgetragen. Während der gesamten Aushärtezeit wird auf das zunächst flüssige und anschließend im Formwerkzeug abbindende Harz bzw. Lack trotz eines abbindungsbedingten Schwundes ein zeitlich gleich bleibender Druck ausgeübt. Der Druck wird dabei derart gewählt, dass eventuell vorhandene Luft in dem flüssigen Harz bzw. Lack gelöst wird. Bei dem Verfahren gemäß DE 43 16 154 A wird zum Beschichten ein fertiges Innenausbauteil in das Formwerkzeug eingelegt. Das Herstellen des Innenausbauteils erfolgt demnach unabhängig von seiner Beschichtung. Während des Beschichtens wird der Forminnendruck trotz des Schwundes aufrechterhalten, indem der Stempel des Formwerkzeugs nachgefahren wird. Der hohe Forminnendruck soll bewirken, dass Luft während des Aushärtens gelöst bleibt und so die Qualität der Beschichtung nicht negativ beeinflusst. Die externe Herstellung des zu überspritzenden Innenausbauteiles ist nachteilig, da dies insbesondere den apparativen Aufwand des Verfahrens erhöht. Die Herstellkosten sind somit erheblich höher.

Außerdem ist aus EP 934 808 A ein Verfahren zum Beschichten in einer Form bekannt, welches in einem ersten Schritt das Herstellen eines Formkörpers in der Form aus einem synthetischen Kunstharz nach einem Spritzgießverfahren, einem Prägespritzverfahren oder einem Spritzdruckverfahren umfasst. Dies geschieht durch Anwenden eines Klemmdrucks auf eine Form, die eine fixierte Formhälfte und eine bewegliche Formhälfte einschließt. In einem zweiten Schritt wird der Klemmdruck vermindert oder die fixierte und bewegliche Formhälfte auseinander genommen, bevor in einem weiteren Schritt ein Beschichtungsmaterial zwischen eine innere Oberfläche der Form und eine Oberfläche des Formkörpers in die Form eingespritzt wird. Das Klemmen der Form nach dem Einspritzen des Beschichtungsmaterials erfolgt unter bestimmten mehrstufenweise veränderbaren Klemmdrücken mit bestimmten Klemmdruckübergangszeitspannen. Beide Schritte des Verfahrens gemäß EP 934 808 A, das Formen des Formkörpers und das Beschichten des Formkörpers, werden in einer Kavität durchgeführt, wobei das Aushärten der Beschichtung unter einem speziellen Druckprofil erfolgt. Da auch in diesem Verfahren die einzelnen Schritte in einer Kavität durchgeführt werden, gelten die gleichen Nachteile wie für das Verfahren gemäß EP 197 496 A.

US 2003/0197307 A offenbart ein Verfahren zum Spritzgießen eines Formteils und anschließendem Beschichten mit einer unter Wärme aushärtenden Lackschicht. Das Spritzgießen und anschließende Beschichten finden in zwei getrennten Werkzeugkavitäten statt. Gemäß US 2003/0197307 A wird zur Beschichtung eine duroplastische Zusammensetzung, welche im Wesentlichen keine leichtflüchtigen Komponenten enthält, eingesetzt.

In der DE 19650584 C1 wird ein Verfahren und eine Vorrichtung zur Herstellung eines Mehrschicht - Kunststoffteils beschrieben, wobei für Spritzgießen, und Beschichten verschiedene Werkzeuge genutzt werden.

In den vorbeschriebenen Prozessen wird jedoch kein konstanter oder erhöhter Druck über Beschichtungs- und Aushärtephase gehalten, so dass die Qualität der beschichteten Teile Mängel aufweist.

Die Aufgabe der vorliegenden Erfindung liegt darin, ein Verfahren zum Formen eines Substrats und Beschichten mit einem Lack bereitzustellen, welches die oben erwähnten Nachteile des Standes der Technik nicht aufweist. Die Lackbeschichtung soll insbesondere unabhängig von ihrer Dicke gleichförmig und von einwandfreier Qualität aufgetragen werden.

Gegenstand der Erfindung ist ein Verfahren zum Formen und Beschichten eines Substrats in einem Formwerkzeug mit wenigstens zwei Kavitäten umfassend die folgenden Schritte:
(a) Formen eines Substrats in einer ersten Kavität eines Formwerkzeugs
(b) Einbringen des gemäß Schritt (a) hergestellten Substrats in eine zweite Kavität des Formwerkzeugs
(c) Beschichten des gemäß Schritt (a) hergestellten Substrats in der zweiten Kavität mit einem Lack, wobei das Beschichten unter Druck, d.h. unter erhöhtem Druck, erfolgt und Aushärten des Lackes.

Das erfindungsgemäße Verfahren wird in einem Formwerkzeug durchgeführt, das zwei oder mehrere Kavitäten aufweist, so dass die beiden Verfahrensschritte (a) Formen und (c) Beschichten des Substrats in verschiedenen Kavitäten erfolgen. Die Oberflächen der Kavitäten können aus gleichen oder unterschiedlichen Materialien, wie z.B. Glas, Keramik, Kunststoff, Metalle oder Legierungen, gefertigt sein.

Das Formen des Substrats in einer ersten Kavität gemäß Schritt (a) kann beispielsweise durch Spritzgießen, Spritzprägen, Pressen, Reaktionsspritzgießen (reaction injection molding, RIM) oder Schäumen erfolgen. Als Materialien können alle thermoplastischen und duroplastischen Kunststoffe, z.B. Polycarbonat (PC), Polyester, insbesondere Polybutylenterephthlat (PBT) oder Polyethylenterephthalat (PET), Polyamid (PA), Polyethylen (PE), Polypropylen (PP), Polystyrol (PS), Poly(Acrylnitril-Co-Butadien-Co-Styrol) (ABS), Poly(Acrylnitril-Co-Styrol-co-Acrylester (ASA), Poly(Styrol-Co-Acrylnitril) (SAN), Polyoxymethylen (POM), Cyclische Polyolefine (COC), Polyphenylenoxid (PPO), Polymethylmethacrylat (PMMA), Polyphenylensulfid (PPS), Polyurethan (PUR), Epoxidharz (EP), Polyvinylchlorid (PVC) und deren Blends eingesetzt werden. Das Substrat kann von beliebiger Form sein.

Vorzugsweise erfolgt das Formen des Substrats gemäß Schritt (a) nach dem Spritzgießverfahren aus einem thermoplastischen Kunststoff. Das Spritzgießverfahren ist aus dem Stand der Technik hinlänglich bekannt. Wird das Substrat durch Spritzgießen aus einem thermoplastischen Kunststoff hergestellt, sind alle thermoplastischen Kunststoffe, z.B. PC, PBT, PA, PE, PP, PS, ABS, ASA, SAN, PET, POM, COC, PPO/PA oder PPO/PS Blends, PMMA, PPS, Thermoplastisches Polymethan (TPU), EP, PVC und deren Blends geeignet.

Nach dem Formen des Substrats wird das Substrat gemäß Schritt (b) in eine zweite Kavität desselben Formwerkzeugs eingebracht. Dazu wird das Formwerkzeug geöffnet und das Substrat in eine zweite Kavität umgesetzt. Das Umsetzen des Substrats kann nach bekannten Verfahren, wie sie beispielsweise beim Mehrfarbenspritzgießen angewendet werden, erfolgen. Typische Verfahren sind einerseits das Umsetzen mit Drehteller, Wendeplatte, Schiebekavität oder Indexplatte oder vergleichbare Verfahren, bei denen das Substrat auf einem Kern verbleibt. Verbleibt das Substrat zum Umsetzen auf dem Kern, hat dies den Vorteil, dass die Lage auch nach dem Umsetzen passgenau definiert ist. Andererseits sind aus dem Stand der Technik Verfahren zum Umsetzen eines Substrats bekannt, bei denen das Substrat, z.B. mit Hilfe eines Handhabungssystems, aus einer Kavität entnommen und in eine andere Kavität eingelegt wird. Das Umsetzen mit Entnahme des Substrats bietet größeren Gestaltungsspielraum bei der Beschichtung, z.B. bei der Generierung eines Umbugs oder maskierter Bereiche.

Gemäß Schritt (c) des erfindungsgemäßen Verfahrens wird das Substrat in einer zweiten Kavität des Formwerkzeugs mit einem Lack beschichtet, wobei das Beschichten unter Druck erfolgt. Dies bedeutet, dass sowohl das Auftragen als auch das Aushärten des Lacks unter Druck durchgeführt wird. Ein ausreichender Druck ist sowohl in der Einspritz- als auch in der Nachdruckphase, d.h. während des Aushärtens, des Lackes notwendig, um Blasenbildung in der Lackschicht zu vermeiden. Das Auftragen der Lackschicht erfolgt, indem der Lack unter Druck in den Hohlraum zwischen der Oberfläche des Substrats und der Innenwand der Kavität eingefüllt, z.B. eingespritzt, wird. Der Druck muss so groß sein, dass die Kavität gefüllt ist, bevor die Topfzeit des Lackes erreicht ist. Gleichzeitig verhindert der Druck die Blasenbildung an der Fließfront des Lackes. Auch das Aushärten des Lacks erfolgt unter Druck. Während des Aushärtens des Lacks bedeutet im Sinne der vorliegenden Erfindung die Zeit, die mindestens benötigt wird, um ein sicheres Entformen des beschichteten Substrats ohne Beschädigung der Lackschicht zu gewährleisten. Dieser Druck muss so hoch sein, dass eine Blasenbildung im Lack während des Aushärtens unterbunden wird. Ferner sorgt der Druck dafür, dass die Volumenschwindung des Lackes während des Aushärtens ausgeglichen wird. Am Ende der Aushärtzeit darf der Druck in der Kavität bis auf Umgebungsdruck abgefallen sein.

Der Druck während des Beschichtens beträgt vorzugsweise 10 bis 90 bar, besonders bevorzugt 40 bis 60 bar. Dieser von außen aufgebrachte Druck kann während des Beschichtens, d.h. während des Einspritzens und Aushärtens, konstant gehalten werden. Alternativ kann der von außen aufgebrachte Druck während des Beschichtens auch variiert werden, wobei der Druck bevorzugt im Bereich von 10 bis 90 bar, besonders bevorzugt 40 bis 60 bar liegt. Der Druck kann z.B. durch einen Kolben von außen aufgebracht werden. Alternativ kann der Druck durch einen Prägevorgang aufgebracht werden.

Das erfindungsgemäße Verfahren eignet sich für Schichtdicken des Lacks im Bereich von 0,01 bis 3 mm.

In einer bevorzugten Ausführungsform wird die Wärmeausdehnung des Substrats und des Lackes z.B. durch Aufheizen der oberen Formwerkzeughälfte dazu genutzt, den Druck in der Kavität beim Beschichten einzustellen. Durch die Wahl der Werkzeugoberflächentemperaturen und/oder der Verweilzeiten in der ersten und/oder der zweiten Kavität kann gezielt ein Werkzeuginnendruckprofil in Abhängigkeit von der Lackformulierung erzeugt werden. Die Temperatur der ersten Kavität wird für das zu verarbeitende Substratmaterial passend gewählt. Sie beträgt bevorzugt 40 bis 80 °C. Die Verweilzeit in der ersten Kavität beträgt bevorzugt 30 bis 60 Sekunden. In der zweiten Kavität kann der Lack auf das Substrat unter einer an die ausgewählten Materialien angepassten Temperatur im Bereich von 20 bis 120 °C eingespritzt und ausgehärtet werden. Die Verweilzeit in der zweiten Kavität beträgt vorzugsweise mindestens 45 Sekunden, besonders bevorzugt 45 Sekunden bis 2 Minuten. Da die Verweilzeit von der Lackformulierung abhängt, kann die Verweilzeit auch länger sein, z.B. bis zu 10 Minuten betragen.

Während in der ersten Kavität aufgrund der Abkühlung des Substrats Schwindung eintritt, findet in der zweiten Kavität aufgrund der erhöhten Temperatur Wärmeausdehnung des Substrats und des Lackes statt. Die Wärmeausdehnung kann gezielt so eingestellt werden, dass sie den gewünschten Innendruck in der zweiten Kavität erreicht. In der zweiten Kavität wird bevorzugt diejenige Werkzeughälfte aufgeheizt, air die die Lackschicht angrenzt. Die erhöhte Temperatur in der zweiten Kavität begünstigt somit nicht nur das Aushärten, sondern erlaubt auch, den Werkzeuginnendruck aufgrund der Wärmeausdehnung von. Lackschicht und Substrat gezielt zu beeinflussen.

Darüber hinaus ist es möglich, in verschiedenen Bereichen der Kavitäten die Temperatur der Werkzeugoberflächen unterschiedlich einzustellen. Dies kann beispielsweise gezielt dazu genutzt werden, lokale Werkzeuginnendruckprofile zu erzeugen.

Bevorzugt ist daher ein Verfahren bei dem der Druck in der zweiten Kavität oder in Teilen der zweiten Kavität in Schritt c) durch Erwärmen des Substrates und des Lacks während der Beschichtung und Aushärtung konstant oder oberhalb eines Grenzdruckes von 10 bar (10.000 hPa) gehalten wird.

Diese Ausführungsform, nach der der Innendruck in der Kavität über die Wärmeausdehnung des Substrats und des Lackes erfolgt, ist aus folgenden Gründen von Vorteil gegenüber einem Verfahren, bei dem der Innendruck über den von außen angelegten Druck eingestellt wird: Erstens kann der Druck gleichmäßig über das gesamte Formteil aufgebracht werden, ohne dass Lack während der Aushärtephase in die Kavität hineingepresst werden muss. Zweitens kann die Volumenschwindung des Lackes durch Aushärten lokal ausgeglichen werden. Schließlich kann durch gezielte lokal unterschiedliche Werkzeugtemperierung der Druck bei der Aushärtung variiert werden.

Das Beschichten des Substrats gemäß Schritt c) erfolgt insbesondere, indem der Lack über eine oder mehrere Düsen so in die Kavität eingespritzt wird, dass der Hohlraum zwischen Oberfläche des Substrats und Werkzeuginnenwand vollständig mit Lack gefüllt wird. Für ein optimales Einspritzen des Lacks werden Anzahl und Lage der Einspritzpunkte in einer dem Fachmann bekannten Weise entsprechend gewählt. Ein Kriterium für die Auslegung der zweiten Kavität ist die gezielte Verdrängung der in der Kavität vorhanden Luft und ihre Abführung über die Trennebene oder Entlüftungskanäle während des Einspritzens. Hierfür können beispielsweise Berechnungsprogramme, wie sie aus dem Stand der Technik bekannt sind, herangezogen werden. Die Angussgestaltung für die Lackeinspritzung kann z.B. nach den für die Herstellung von RIM-Formteilen aus dem Stand der Technik bekannten Angussvarianten erfolgen.

In einer bevorzugten Ausführungsform erfolgt das Beschichten gemäß Schritt (c) daher nach dem RIM-Verfahren, wie aus dem Stand der Technik bekannt.

Dies hat den Vorteil, dass die beiden Komponenten des zweikomponentigen Lacksystems erst unmittelbar vor dem Einspritzen in die Kavität vereinigt werden.

Gegenüber anderen Verfahren bietet das RIM-Verfahren die Möglichkeit die Komponenten direkt vor der Einleitung in die Kavität zu vermischen. Dadurch wird das bevorzugte Verfahren unabhängig von der Topfzeit des Systems. Der Vorteil konnte bei Versuchen deutlich gezeigt werden. Weitere Vorteile sind der wesentlich verringerte Reinigungsaufwand sowie die erhöhte Prozesssicherheit, da Störungen im Bereich der Spritzgießmaschine keine Folgeschäden in der Dosierung und Mischung der Lackkomponenten verursachen. Weiterhin kann das System nach einer Produktionsunterbrechung sofort mit der Produktion von qualitativ hochwertig lackierten Formteilen fortfahren.

Die Kavität für das Beschichten des Substrats kann beliebig gestaltet sein, so dass die Lackschicht z.B. über die gesamte Oberfläche des Substrates gleich dick ist. Die Kavität kann jedoch auch so geformt sein, dass in verschiedenen Bereichen des Substrats die Lackschicht unterschiedlich dick ist. Auf diese Weise kann an jeder Stelle des Substrats die gewünschte Lackschichtdicke erzielt werden.

Für die Beschichtung des Substrats gemäß Schritt (c) können alle für die Kunststofflackierung geeigneten lösungsmittelarmen einkomponentigen oder zweikomponentigen Systeme eingesetzt werden, die sowohl radikalisch, ionisch als auch über Polyaddition aushärten können. Als lösungsmittelarme Lacksysteme werden solche mit einem Lösungsmittelgehalt von insbesondere maximal 10 Gew.%, bevorzugt maximal 2 Gew.%, besonders bevorzugt maximal 1 Gew.%, am Lackanteil angesehen. Besonders bevorzugt werden lösungsmittelfreie Systeme eingesetzt. Insbesondere werden lösungsmittelfreie Polyurethanlacksysteme oder Polyharnstoffsysteme eingesetzt, wobei besonders bevorzugt lösungsmittelfreie aliphatische Polyurethanlacksysteme verwendet werden. Beim Einsatz von zweikomponentigen Lacksystemen kann die Durchmischung dieser Komponenten je nach Topfzeit und Anlagentechnik entweder in der Lackeinspritzdüse, z.B. durch einen Hochdruckgegenstrommischkopf, oder in der Zuleitung durch Statikmischer oder aktive Vermischung mit Hilfe eines dynamischen Mischers erfolgen.

Bei einer langen Topfzeit kann die Vermischung der beiden Komponenten auch außerhalb der Anlage erfolgen und die Mischung wie ein einkomponentiges System verarbeitet werden. Hierbei kann beispielsweise die Verarbeitungszeit durch Kühlung der Komponenten vor dem Einspritzen verlängert und durch eine hohe Werkzeugtemperatur in der zweiten Kavität eine kurze Reaktionszeit erzielt werden.

Üblicherweise werden Lacksysteme mit einer kurzen Topfzeit eingesetzt. Bevorzugt werden Systeme mit einer Topfzeit von maximal 30 min, besonders bevorzugt mit einer Topfzeit von maximal 10 min, ganz besonders bevorzugt mit einer Topfzeit von maximal 2 min gewählt. Für kurze Topfzeiten wird bevorzugt ein Hochdruckgegenstrommischkopf zum Vermischen der beiden Komponenten eingesetzt. Im Vergleich zu anderen Verfahren erlaubt dies die höchste Produktivität. Außerdem verbleiben am Ende des Prozesses keine Reste von vermischten Lackrohstoffen in dem Formwerkzeug.

In einem zusätzlichen Verfahrensschritt kann vor dem Formen des Substrats gemäß Schritt (a) und dem Beschichten gemäß Schritt (c) ggf. ein Trennmittel auf die Oberfläche der Kavitäten aufgetragen, z.B. aufgesprüht, werden. Als Trennmittel können die aus dem Stand der Technik bekannten Mittel eingesetzt werden.

Das erfindungsgemäße Verfahren kann auch in einem Formwerkzeug mit mehr als zwei Kavitäten durchgeführt werden. So können z.B. weitere Lackschichten mit ggf. spezifischen Eigenschaften aufgetragen werden, indem jede Lackschicht in einer eigenen Kavität aufgebracht wird. Weiterhin ist es möglich, mehrere Substrate in jeweils einer Kavität in einem Prozessschritt gemäß Schritt (a) parallel herzustellen und diese anschließend nacheinander in einer Kavität oder parallel in jeweils einer Kavität gemäß Schritt (c) mit Lack zu beschichten.

Das erfindungsgemäße Verfahren bietet gegenüber dem Stand der Technik mehrere Vorteile. Die Zykluszeit ist kürzer, da sie sich nicht aus der Summe der Zeiten der einzelnen Verfahrensschritte zusammensetzt. Außerdem können Prozessparameter wie z.B. die Werkzeugwandtemperatur für die Verfahrensschritte (a) und (c) unabhängig voneinander gewählt und somit optimal an das Substratmaterial und den Lack angepasst werden. Dadurch kann u.a. auch die Zykluszeit optimiert werden. Weiterhin kann die Dicke der Lackschicht an jeder Stelle der Kavität frei gewählt werden. Ferner können für die Oberflächen der verschiedenen Kavitäten unterschiedliche Materialien, wie z.B. Glas, Keramik, Kunststoff, verschiedene Metalle oder Legierungen, gewählt werden. Auch können Trennmittel, soweit erforderlich, gezielt auf den Werkzeugoberflächen eingesetzt werden. So kann z.B. eine gute Trennung des Lackes von der Werkzeugoberfläche erreicht werden, ohne die Haftung des Lackes auf dem Substrat negativ zu beeinflussen.

Ein weiterer Gegenstand der Erfindung ist ein Formwerkzeug zur Durchführung des erfindungsgemäßen Verfahrens, umfassend wenigstens zwei Kavitäten, wobei wenigstens eine Kavität mit einer Spritzgieß-Einrichtung und eine Kavität mit einer RIM-Lackeinspritz-Einrichtung verbunden ist.

Die Spritzgieß-Einrichtung des erfindungsgemäßen Formwerkzeugs dient der Herstellung des Substrats aus thermoplastischem Kunststoff mittels Spritzgießen in einer ersten Kavität des Werkzeugs. Geeignete Spritzgieß-Einrichtungen sind dem Fachmann aus dem Stand der Technik bekannt. Sie umfassen einen Standardspritzgießmaschinenaufbau bestehend aus einer Plastifiziereinheit zur Substrataufbereitung und einer Schließeinheit, die für die Verfahr-, Öffnungs- und Schließbewegungen des Werkzeugs verantwortlich ist, Tempiergeräte und ggf. Trocknungsgeräte für das Substrat.

Die Lackeinspritz-Einrichtung, welche in dem erfindungsgemäßen Formwerkzeug mit einer zweiten Kavität verbunden ist, dient der Beschichtung des Substrats mit einem Lack gemäß Schritt (c). Geeignete Lackeinspritz-Einrichtungen sind dem Fachmann aus dem Stand der Technik bekannt: Sie umfassen einen oder ggf. mehrere Vorratsbehälter für die einzelnen Komponenten, Rührer, Förderpumpen, Temperiereinrichtungen zur Temperaturführung, Förderleitungen und ggf. eine Mischvorrichtung für die Vermischung von mehr als einer Lackkomponente, z.B. einen Mischkopf zur Hochdruckgegenstrahlvermischung.

Die nach dem erfindungsgemäßen Verfahren hergestellten, mit Lack beschichteten Substrate eignen sich beispielsweise Automobilinnenteile, wie z.B. Säulenverkleidung, Zierleisten, Handschuhfachdeckel, Abdeckungen, Blenden, Instrumententafel, Teile des Luftfördersystems, und industriell gefertigte Kunststoffteile, wie z.B. Gehäuse von Elektrogeräten, Mobiltelefone, Haushaltsartikel.

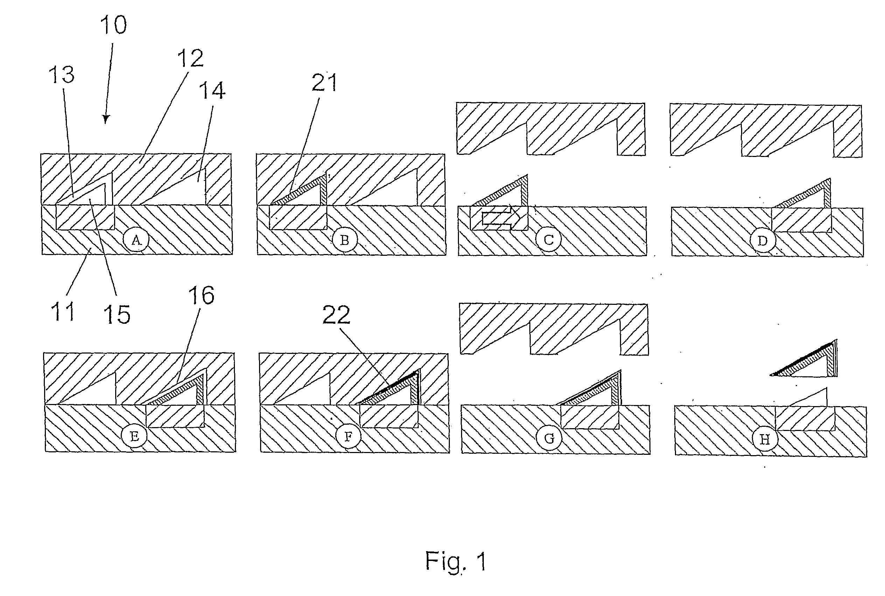

Die Erfindung wird nachfolgend anhand der beigefügten Zeichnung näher erläutert. Figur 1 zeigt anhand der Schritte (A)-(H) den prinzipiellen Verfahrensablauf. Dargestellt ist das Spritzgießwerkzeug 10 mit zwei Werkzeughälften 11, 12 sowie zwei Kavitäten, einer Substratkavität 13 und einer Lackkavität 14. Beim Start (A) gemäß der skizzierten Ausführungsform des erfindungsgemäßen Verfahrens ist das Werkzeug 10 geschlossen und der Kern 15 befindet sich in der Substratkavität 13. Der thermoplastische Kunststoff zur Formung des Substrats 21 wird eingespritzt und erstarrt (Schritt (B)). Nach Erreichen der Entformungstemperatur erfolgt das Umsetzen des Substrats 21 von der Substratkavität 13 in die Lackkavität 14 (Schritt (C) und (D)). Dazu wird das Formwerkzeug 10 geöffnet (Schritt (C)) und in der dargestellten Ausführungsform wird das Substrat-Formteil 21 zusammen mit dem Kern 15 in die Lackkavität 14 verschoben (entsprechend der Markierung durch den Pfeil in Schritt (C)). Befindet sich das Substrat-Formteil 21 in Lack-Position (Schritt (D)), wird das Werkzeug 10 geschlossen (Schritt (E)). Die Lackkavität 14, d.h. der Formhohlraum zwischen Substrat-Formteil 21 und Werkzeugwand 16, wird mit Lack 22 über Düsen (nicht dargestellt) gefüllt. Der Lack 22 wird in der Aushärtephase unter Druck gehalten (Schritt (F)). Hat der Lack ausreagiert und ist abgekühlt, wird das Werkzeug 10 geöffnet (Schritt (G)) und das mit Lack 22 beschichtete Substrat 21 entformt (Schritt (H)).

### Beispiele

### Ausführungsbeispiel

Es wurde ein mit Lack beschichtetes Formteil mit einer projizierten Fläche von 40 cm² auf einer Spritzgießmaschine in einem Spritzgießwerkzeug mit zwei Kavitäten (einer Substratkavität und einer Lackkavität, die mit einer RIM-Anlage verknüpft war), hergestellt. Bei dem Formteil aus thermoplastischem Kunststoff handelte es sich um ein kastenförmiges Bauteil mit schrägen Seitenflächen. Die Wanddicke des Substratformteils betrug ca. 3 mm. In einer Versuchsreihe wurden die Flächen des Formteils mit verschiedenen Lackdicken versehen. Die Schichtdicke des Lacks wurde je nach Fläche in den Bereichen von ca. 300 bis 1000 µm eingestellt.

Im ersten Schritt wurde das Substrat hergestellt. Dazu wurde Kunststoffgranulat in einem Spritzgießzylinder aufgeschmolzen. Es handelte sich um PC+ABS-Blend (hier Bayblend^{®} T65 der Fa. Bayer MaterialScience AG), das nach dem Aufschmelzvorgang - analog dem Standardspritzgießverfahren - bei einer Temperatur von 270°C in die erste Werkzeugkavität des geschlossenen Werkzeugs eingespritzt wurde. Nach Ablauf der Nachdruckzeit und Kühlzeit von 45 s wurde das Werkzeug geöffnet. Dabei wurde das hergestellte Substrat auf der Auswerferseite des Spritzgießwerkzeugs gehalten und von der Substrat-Position (2) komplett mit dem Werkzeugkern über einen Schieber in die Lack-Position (4) verfahren (vgl. Figur 1). Ausschließlich die Lackkavität wurde zuvor mit einem handelsüblichen Trennmittel vom Typ ACMOS 36-4566 der Fa. Acmos, Deutschland, benetzt. Danach wurde das Spritzgießwerkzeug erneut geschlossen, eine Schließkraft für einen Druck von maximal 200 bar wurde aufgebaut und ein lösemittelfreier aliphatischer Polyurethanlack, bestehend aus einem lösemittelfreien Polyesterpolyol (Desmophen^{®} VPLS 2249-1 der Fa. Bayer MaterialScience AG) und einem lösemittelfreien aliphatischen Polyisocyanat (Desmodur^{®} XP 2410 der Fa. Bayer MaterialScience AG) mit einem Mengenverhältnis von 1:1, katalysiert mit ca. 1 % DBTL, unter einem Druck von 50 bar in die Lackkavität eingespritzt. Die zwei Lackkomponenten wurden dabei von der RIM-Anlage in einen Hochdruckgegenstrommischkopf gefördert und vor dem Einspritzen dort vermischt. Nach dem Ende des Einspritzens wurde die Lackeinspritzdüse mittels eines Hydraulikzylinders unter einem Druck von zunächst 50 bar versiegelt, um ein Zurückströmen des Lackes zu verhindern. Durch die im Vergleich zur mittleren Entformungstemperatur des Thermoplastformteils höhere mittlere Temperatur in der Kavität stieg der Druck in der Kavität während des Aushärtens so weit an, dass die Werkzeugoberfläche sehr gut abgeformt und eine Blasenbildung im Lack sicher vermieden wurde. Nach Ablauf der Reaktions- und Kühlzeit von 45 sec wurde das Werkzeug geöffnet und das lackierte Formteil entformt. Im Rahmen der Versuche wurden die Lackeinspritztemperatur und die Werkzeugoberflächentemperatur der Lackkavität auf der Lackseite variiert. Dabei ergaben sich die in der folgenden Tabelle aufgeführten zeitlichen Druckverläufe.

| | **Temperatur der Lackkavität** | | |
|---|---|---|---|
| Zeit nach Einspritzen des Lackes | 80°C | 100°C | 120°C |
| 0 s | 50 bar | 50 bar | 50 bar |
| 10 s | 70 bar | 95 bar | 150 bar |
| 20 s | 80 bar | 115 bar | 170 bar |
| 30 s | 70 bar | 110 bar | 180 bar |
| 40 s | 50 bar | 100 bar | 175 bar |

Wie man an den Druckverläufen erkennt, kam es am Ende der Aushärtezeit zu einem Druckabfall der auf die Volumenschwindung des Lackes während der Aushärtung zurückzuführen war.

Der Lack zeigte eine gute Haftung zum Substrat. Das lackierte Formteil konnte problemlos aus dem Werkzeug entnommen werden. Die Lackoberfläche war ein Spiegelbild der hochglanzpolierten Werkzeugoberfläche.

### Vergleichsbeispiel

Es wurde ein Vergleichsversuch an einem Musterplattenwerkzeug durchgeführt. Hierbei war das Werkzeug auf einer Spritzgießmaschine aufgebaut und mit einer RIM-Anlage verbunden. Das Werkzeug besaß eine plattenförmigen Kavität, die im Standardspritzgießverfahren mit Kunststoff gefüllt wurde. Nach Ablauf der Kühlzeit wurde in die immer noch geschlossene Werkzeugkavität der Lack eingeleitet. Dies erfolgte über eine RIM-Anlage, die die zwei Lackkomponenten mittels eines Statikmischers in einem Schlauchsystem vermischte und in das Werkzeug einleitete. Nach dem Ausreagieren und Abkühlen des Lacksystems wurde das Werkzeug geöffnet und die beschichtete Platte entformt. Das Substrat war auch hier ein PC+ABS-Blend (hier Bayblend^{®} T65 der Fa. Bayer MaterialScience AG) und der Lack ein lösemittelfreier aliphatischer Polyurethanlack, bestehend aus einem lösemittelfreien Polyesterpolyol (Desmophen^{®} VPLS 2249-1 der Fa. Bayer MaterialScience AG) und einem lösemittelfreien aliphatischen Polyisocyanat (Desmodur^{®} XP 2410 der Fa. Bayer MaterialScience AG) mit einem Mengenverhältnis von 1:1, katalysiert mit ca. 0,2 % DBTL analog zu dem oben beschriebenen Beispiel, jedoch durch die geringe Katalysatorkonzentration mit erheblich länger eingestellter Topfzeit von ca. 20 min. Kürzere Topfzeiten konnten in diesem Fall wegen des gewählten Verfahrensablaufes und der Mischung der Komponenten in der Zuleitung nicht realisiert werden.

Mit diesem Versuchsablauf waren folgende Nachteile verbunden. Da das Formwerkzeug bis zur Lackeinleitung geschlossen blieb, d.h. zwischen der Substratherstellung und der Substratbeschichtung nicht geöffnet wurde, musste die Kavität bereits vor dem Kunststoffeinspritzvorgang mit Trennmittel benetzt werden. Beim Einspritzen des Kunststoffes setzte sich Trennmittel teilweise auch auf der Kunststoffoberfläche ab. Dadurch verschlechterte sich die Haftung des Lacks zum Substrat deutlich. Außerdem konnte die Lackdicke nicht definiert eingestellt werden. Sie richtete sich nach der Schwindung des Substrats und der Formteilgeometrie. Dies führte insbesondere an den frei schwindenen Kanten des Formteils zu einer unerwünscht großen Lackdicke.

Aufgrund der sequentiellen Durchführung der Verfahrensschritte bestand die Zykluszeit aus der Summe der Zeiten für die Einzelprozesse. Dies hatte wiederum Auswirkung auf die Wahl des Lackes, da bei dieser Verfahrensweise die Topfzeit des Lacksystems eine wesentliche Rolle spielte. Die Wahl des Lackes war somit eingeschränkt.

Weiterhin konnte die Werkzeugoberflächentemperatur nicht frei gewählt werden so dass es nicht möglich war, durch Wärmeausdehnung die gewünschten Innendruckprofile zu erzielen und die damit verbundenen Vorteile zu nutzen.

## Patentansprüche

1. Verfahren zum Formen und Beschichten eines Substrats in einem Formwerkzeug mit wenigstens zwei Kavitäten umfassend die folgenden Schritte:
(a) Formen eines Substrats in einer ersten Kavität eines Formwerkzeugs
(b) Einbringen des gemäß Schritt (a) hergestellten Substrats in eine zweite Kavität des Formwerkzeugs
(c) Beschichten des gemäß Schritt (a) hergestellten Substrats in der zweiten Kavität mit einem Lack, wobei das Beschichten unter erhöhtem Druck erfolgt und Aushärten des Lackes,
wobei der Druck in der zweiten Kavität oder in Teilen der zweiten Kavität in Schritt c) durch Erwärmen des Substrates und des Lackes während der Beschichtung und Aushärtung konstant oder oberhalb eines Grenzdruckes von 10 bar (10 000 hPa) gehalten wird.

2. Verfahren nach Anspruch 1, **dadurch gekennzeichnet, dass** die Beschichtung mit Lack gemäß Schritt c) nach dem Reaction Injection Molding Verfahren durchgeführt wird.

3. Verfahren nach einem der Ansprüche 1 bis 2, **dadurch gekennzeichnet, dass** das Formen des Substrats gemäß Schritt (a) mittels Spritzgießen, Spritzprägen, Pressen, Schäumen oder Reaktionsspritzgießen erfolgt.

4. Verfahren nach einem der Ansprüche 1 bis 3, **dadurch gekennzeichnet, dass** ein radikalisch, ionisch oder über Polyaddition härtendes Lacksystem verwendet wird.

5. Verfahren nach einem der Ansprüche 1 bis 4, **dadurch gekennzeichnet, dass** ein lösemittelarmes Lacksystem mit einem Lösungsmittelgehalt von maximal 10 Gew.-%, bevorzugt maximal 2 Gew.-%, besonders bevorzugt maximal 1 Gew.-%, bezogen auf den Lackanteil verwendet wird.

6. Verfahren nach einem der Ansprüche 1 bis 4, **dadurch gekennzeichnet, dass** ein lösemittelfreies Lacksystem verwendet wird.

7. Verfahren nach einem der Ansprüche 1 bis 6, **dadurch gekennzeichnet, dass** ein einkomponentiger oder zweikomponentiger Lack eingespritzt wird.

8. Verfahren nach einem der Ansprüche 1 bis 7, **dadurch gekennzeichnet, dass** ein Polyurethansystem oder ein Polyharnstoffsystem als Lack verwendet wird.

9. Verfahren nach einem der Ansprüche 1 bis 8, **dadurch gekennzeichnet, dass** ein lösemittelfreies, aliphatisches Polyurethansystem als Lack verwendet wird.

10. Verfahren nach einem der Ansprüche 1 bis 9, **dadurch gekennzeichnet, dass** das Lacksystem eine Topfzeit von maximal 30 min, bevorzugt maximal 10 min, besonders bevorzugt maximal 2 min, aufweist.

11. Verfahren nach einem der Ansprüche 1 bis 10, **dadurch gekennzeichnet, dass** der Druck während des Beschichtens gemäß Schritt c) im Bereich von 10 bis 90 bar (10.000 bis 90 000 hPa liegt.

## Claims

1. Process for moulding and coating a substrate in a mould having at least two cavities, comprising the following steps:
(a) moulding of a substrate in a first cavity of a mould
(b) introduction of the substrate produced according to step (a) into a second cavity of the mould
(c) coating of the substrate produced according to step (a) in the second cavity with a lacquer, the coating being carried out under pressure, followed by the curing of the lacquer, where the pressure in the second cavity or in parts of the second cavity is maintained constant or maintained above a limiting pressure of 10 bar (10,000 hPa) in step (c) by heating the substrate and the lacquer during the coating and curing.

2. Process according to claim 1, **characterized in that** the coating with lacquer according to step (c) is carried out according to the reaction by an injection moulding process.

3. Process according to one of claims 1 to 2, **characterized in that** the moulding of the substrate according to step (a) is carried out by means of injection moulding, injection compression moulding, compression, foaming or reaction injection moulding.

4. Process according to one of claims 1 to 3, **characterized in that** a lacquer system which cures via free radicals, ionically or via polyaddition is used.

5. Process according to one of claims 1 to 4, **characterized in that** a low-solvent lacquer system having a solvent content of not more than 10 % by weight, preferably not more than 2 % by weight, particularly preferably not more than 1 % by weight of the lacquer content is used.

6. Process according to one of claims 1 to 4, **characterized in that** a solvent-free lacquer system is used.

7. Process according to one of claims 1 to 6, **characterized in that** a one-component or two-component lacquer is injected in.

8. Process according to one of claims 1 to 7, **characterized in that** a polyurethane system or a polyurea system is used as the lacquer.

9. Process according to one of claims 1 to 8, **characterized in that** a solvent-free aliphatic polyurethane system is used as the lacquer.

10. Process according to one of claims 1 to 9, **characterized in that** the lacquer system has a pot life of not more than 30 min, preferably not more than 10 min, particularly preferably not more than 2 min.

11. Process according to one of claims 1 to 10, **characterized in that** the pressure during the coating according to step c) is in the range from 10 to 90 bar (10,000 to 90,000 hPa).

## Revendications

1. Procédé pour le moulage et l'enduction d'un subjectile dans un outil de moulage comportant au moins deux cavités, comprenant les étapes suivantes :
(a) moulage d'un subjectile dans une première cavité d'un outil de moulage
(b) introduction du subjectile, produit selon l'étape (a), dans une deuxième cavité de l'outil de moulage
(c) enduction du subjectile, produit selon l'étape (a), dans la deuxième cavité avec une peinture, l'enduction s'effectuant sous pression élevée, et durcissement de la peinture,
la pression dans la deuxième cavité ou dans des parties de la deuxième cavité dans l'étape (c) étant maintenue constante ou au-dessus d'une pression limite de 10 bars (10 000 hPa) par chauffage du subjectile et de la peinture pendant l'enduction et le durcissement.

2. Procédé selon la revendication 1, **caractérisé en ce que** l'enduction avec la peinture selon l'étape (c) est effectuée selon le procédé de moulage par injection-réaction.

3. Procédé selon l'une quelconque des revendications 1 et 2, **caractérisé en ce que** le moulage du subjectile selon l'étape (a) s'effectue par moulage par injection, moulage par injection-compression, pressage, moussage ou moulage par injection-réaction.

4. Procédé selon l'une quelconque des revendications 1 à 3, **caractérisé en ce qu'**on utilise un système de peinture durcissant par voie radicalaire, par voie ionique ou par polyaddition.

5. Procédé selon l'une quelconque des revendications 1 à 4, **caractérisé en ce qu'**on utilise un système de peinture pauvre en solvant, ayant une teneur en solvant d'au maximum 10 % en poids, de préférence d'au maximum 2 % en poids, de façon particulièrement préférée d'au maximum 1 % en poids, par rapport à la quantité de la peinture.

6. Procédé selon l'une quelconque des revendications 1 à 4, **caractérisé en ce qu'**on utilise un système de peinture sans solvant.

7. Procédé selon l'une quelconque des revendications 1 à 6, **caractérisé en ce qu'**on injecte une peinture monocomposant ou bicomposant.

8. Procédé selon l'une quelconque des revendications 1 à 7, **caractérisé en ce qu'**on utilise comme peinture un système polyuréthane ou un système polyurée.

9. Procédé selon l'une quelconque des revendications 1 à 8, **caractérisé en ce qu'**on utilise comme peinture un système polyuréthane aliphatique sans solvant.

10. Procédé selon l'une quelconque des revendications 1 à 9, **caractérisé en ce que** le système de peinture présente un délai d'utilisation d'au maximum 30 min, de préférence d'au maximum 10 min, de façon particulièrement préférée d'au maximum 2 min.

11. Procédé selon l'une quelconque des revendications 1 à 10, **caractérisé en ce que** la pression pendant l'enduction selon l'étape c) se situe dans la plage de 10 à 90 bars (10 000 à 90 000 hPa).
